(19) Europäisches Patentamt
European Patent Office
Office européen des brevets

(11) **EP 2 713 280 B1**

(12) **EUROPEAN PATENT SPECIFICATION**

(45) Date of publication and mention
of the grant of the patent:
**22.02.2017 Bulletin 2017/08**

(51) Int Cl.:
**G06F 13/38** *(2006.01)*     **G06F 13/40** *(2006.01)*
**G06F 1/26** *(2006.01)*

(21) Application number: **11795209.3**

(22) Date of filing: **22.08.2011**

(86) International application number:
**PCT/CN2011/078722**

(87) International publication number:
**WO 2011/157243 (22.12.2011 Gazette 2011/51)**

(54) **HAND HELD DEVICE, USB CHARGER, AND METHOD FOR HAND HELD DEVICE TO IDENTIFY USB CHARGER**

HANDGEFÜHRTE VORRICHTUNG, USB-LADEGERÄT UND VERFAHREN ZUR IDENTIFIZIERUNG DES USB-LADEGERÄTES DURCH DIE HANDGEFÜHRTE VORRICHTUNG

TERMINAL MOBILE, CHARGEUR USB ET PROCÉDÉ PERMETTANT À UN TERMINAL MOBILE D'IDENTIFIER UN CHARGEUR USB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.04.2014 Bulletin 2014/14**

(73) Proprietor: **Huawei Device Co., Ltd.**
**Longgang District**
**Shenzhen**
**Guangdong 518129 (CN)**

(72) Inventor: **SONG, Gang**
**Guangdong 518129 (CN)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(56) References cited:
**CN-A- 1 620 744      CN-A- 101 398 459**
**CN-A- 101 901 201    US-A1- 2005 174 094**
**US-A1- 2009 184 688  US-A1- 2010 070 659**

• **REMPLE TERRY: "Battery charging specification", 20090415 , no. Revision 1.1 15 April 2009 (2009-04-15), pages I-VI,1, XP002676116, Retrieved from the Internet: URL:http://www.usb.org/developers**

Description

TECHNICAL FIELD

The present invention relates to the field of hand held device charger technologies, and in particular, to a hand held device, a USB charger, and a method for a hand held device to identify a USB charger.

BACKGROUND

With the extensive application of a USB (Universal Serial Bus, universal serial bus) interface, a USB charger becomes the trend for development. A USB charger includes a charging head and a power cable, where the charging head possesses a type A USB interface, and the power cable is a USB transmission line, and the type A USB interface includes four pins including VBUS, D+, D-, and GND, where the VBUS pin is configured as the positive pole of an output direct current power supply, and the GND is configured as the negative pole of the output direct current power supply, and the USB transmission line and the charging head of the USB charger involved in the present invention are an integrated and fixed connection structure.

Currently, a standard USB charger short-circuits the D+ pin and the D- pin inside the charging head at its charging head side and they are not connected to any other part of the charging head. The hand held device side identifies, by determining whether the D+ pin and the D- pin are short-circuited, a standard USB charger.

To make charging of a hand held device safer, it is required to use a USB charger that matches the hand held device to charge the hand held device, and the so-called USB charger that matches the hand held device is in compliance with the standard USB charger rule and the hand held device may only be charged by a USB charger that matches the hand held device. However, as short-circuiting the D+ pin and the D-pin at the charging head side of a USB charger is a connection character possessed by all the standard USB chargers, the hand held device may not identify, only by determining whether the D+ pin and the D- pin are short-circuited, the USB charger that matches the hand held device, thereby failing to ensure the charging safety of the hand held device.

The "Battery charging specification", Revision 1.1, published by the USB Implementers Forum, Inc. describes a specification for charging via the USB port. In section 3 of the "Battery charging specification", it is described how a charging port can be detected. In particular, it is described in section 3.2.1 that a dedicated charging port is required to short he D+ and D- lines with a specified resistance.

US 2010/070659 discloses aspects of a method and system for operating and/or charging a battery powered USB device based on a USB port type. In this regard, in a USB device comprising a power management IC and a multi-function IC, a port type detection module in the multi-function IC may determine whether the USB device is attached to a standard host port or a charging port. Additionally, a power source in the power management IC, which may supply power to the port type detection module, may be enabled upon attachment of the USB device to a USB port and disabled subsequent to determination of port type. Also, one or more portions and/or functions of the power management IC may be configured based on the determined port type. Similarly, one or more portions and/or functions of the multi-function IC may be enabled or disabled based on the determined port type.

SUMMARY

To solve the foregoing technical problem, embodiments of the present invention provide a hand held device and a method for the hand held device to identify the USB charger, so that the hand held device can exclusively identify its matching charger to ensure charging safety of the hand held device.

Based on one aspect of the present invention, a hand held device is provided, where a charging interface thereof is a universal serial bus USB interface, including 5 pins: VBUS, D+, D-, ID, and GND, where the VBUS pin is a positive pole of an input power supply and the GND is a negative pole of the input power supply, the hand held device further including: an identification information acquisition module and a charging control circuit, where

the identification information acquisition module, connected between the charging control circuit and a non-power pin of the hand held device charging interface, is configured to acquire the identification information of a USB charger, and the non-power pin is the D+ pin, the D- pin, or the ID pin; and

the charging control circuit is configured to receive the identification information of the USB charger provided by the identification information acquisition module and use the identification information to determine whether the USB charger matches the hand held device, wherein the hand held device uses the USB charger for charging when the charging control circuit determines that the USB charger matches the hand held device and wherein the hand held device excludes using the USB charger for charging when the charging control circuit determines that the USB charger does not match the hand held device.

Based on another aspect of the present invention, a method for a hand held device to identify a matching universal serial bus charger is provided, including:

acquiring, by the hand held device, identification information of a USB charger connected to the hand held device; and comparing, by the hand held device, the received identification information with standard identification information, and if the identification information is the standard identification information, identifying that the USB charger is a matching USB charger of the hand held device and using the USB charger for charging; otherwise, identifying that the USB charger is not a matching USB charger of the hand held device and excluding using the USB charger for charging.

## BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments recorded in the present invention, and a person of ordinary skill in the art may still derive other drawings from these accompanying drawings without creative efforts.

FIG. 1 is a schematic structural diagram of a USB charger charging interface according to an embodiment of the present invention;
FIG. 2 is a schematic structural diagram of a hand held device charging interface that matches FIG. 1;
FIG. 3a is a schematic structural diagram of a USB charger charging interface according to an embodiment of the present invention;
FIG. 3b is a schematic structural diagram of a hand held device charging interface that matches the USB charger charging interface shown in FIG. 3 a;
FIG. 3c is a schematic structural diagram of another hand held device charging interface that matches the USB charger charging interface shown in FIG. 3a;
FIG. 4a is a schematic structural diagram of another USB charger charging interface according to an embodiment of the present invention;
FIG. 4b is a schematic structural diagram of a hand held device charging interface that matches the USB charger charging interface shown in FIG. 4a;
FIG. 4c is a schematic structural diagram of another hand held device charging interface that matches the USB charger charging interface shown in FIG. 4a;
FIG. 5a is a schematic structural diagram of another USB charger charging interface according to an embodiment of the present invention;
FIG. 5b is a schematic structural diagram of a hand held device charging interface that matches the USB charger charging interface shown in FIG. 4a;
FIG. 5c is a schematic structural diagram of another hand held device charging interface that matches the USB charger charging interface shown in FIG. 4a;
FIG. 6a is a schematic structural diagram of another USB charger charging interface according to an embodiment of the present invention;
FIG. 6b is a schematic structural diagram of a hand held device charging interface that matches the USB charger charging interface shown in FIG. 6a;
FIG. 7a is a schematic structural diagram of another USB charger charging interface according to an embodiment of the present invention;
FIG. 7b is a schematic structural diagram of a hand held device charging interface that matches the USB charger charging interface shown in FIG. 7a;
FIG. 8a is a schematic structural diagram of another USB charger charging interface according to an embodiment of the present invention;
FIG. 8b is a schematic structural diagram of a hand held device charging interface that matches the USB charger charging interface shown in FIG. 8a;
FIG. 9 is a schematic flowchart of a method for a hand held device to identify a USB charger according to an embodiment of the present invention;
FIG. 10 is a schematic flowchart of another method for a hand held device to identify a USB charger according to an embodiment of the present invention; and
FIG. 11 is a schematic flowchart of still another method for a hand held device to identify a USB charger according to an embodiment of the present invention.

**DESCRIPTION OF EMBODIMENTS**

A USB charger charging interface involved in embodiments of the present invention connected to a hand held device and a hand held device charging interface are both type B USB interfaces or Micro USB interfaces, including 5 pins: VBUS, D-, D+, ID, and GND, where the VBUS pin is a positive pole of an output power supply, the GND is a negative pole of the output power supply, and the other 3 pins are not used, and these 3 unused pins are non-power pins.

To make a person skilled in the art better understand the technical solutions of the present invention, the technical solutions in the embodiments of the present invention are clearly and completely described in the following with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

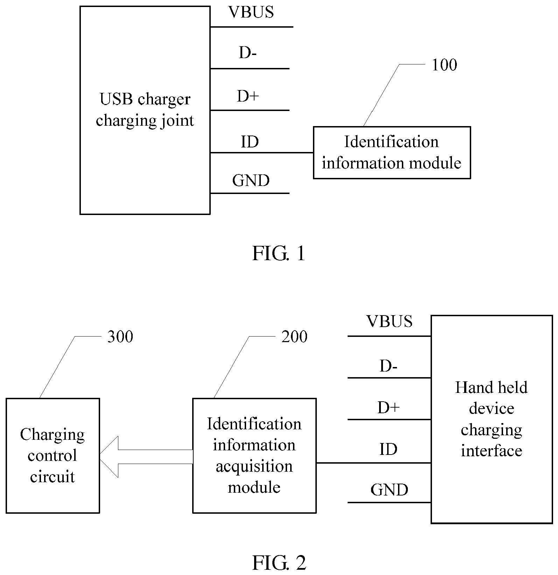

Please refer to FIG. 1, which shows a schematic structural diagram of a USB charger charging interface of an embodiment of the present invention. An identification information module 100 is added to the USB charger charging interface, and is configured to provide the USB charger with identification information that is capable of identifying the identity of the USB charger.

Specifically, the USB charger charging interface is a type B USB interface or a Micro USB interface, including 5 pins: VBUS, D-, D+, ID, and GND, where the VBUS pin is a positive pole of a power supply, and the GND pin is a negative pole of the power supply, and the 3 pins D-, D+, and ID are called non-power pins, and the identification information module 100 is connected to the ID pin.

It should be noted that, FIG. 1 is only a specific schematic diagram of the USB charger charging interface, and the identification information module 100 may also be connected to the D- pin or the D+ pin, which is not limited by the present invention.

Correspondingly, please refer to FIG. 2, which shows a schematic structural diagram of a hand held device charging interface that matches the USB charger interface shown in FIG. 1, and an identification information acquisition module 200 is added between the hand held device charging interface and a charging control circuit 300 to acquire the identification information of the USB charger.

Specifically, the hand held device charging interface is a type B USB interface or a Micro USB interface, including 5 pins: VBUS, D-, D+, ID, and GND, where the VBUS pin is the positive pole of a power supply, and the GND pin is the negative pole of the power supply, and the 3 pins D-, D+, and ID are called non-power pins, an input end of the identification information acquisition module 200 is connected to the ID pin, and an output end of the identification information acquisition module 200 is connected to the charging control circuit 300.

When the USB charger is inserted into the hand held device charging interface, the identification information acquisition module 200 is electrically connected to the identification information module 100, and the identification information acquisition module 200 acquires the identification information inside the identification information module 100 and identifying the USB charger, and provides it to the charging control circuit 300, and the charging control circuit 300 determines whether the identification information is standard identification information, and if yes, the hand held device identifies the USB charger and uses the USB charger for charging; otherwise, the hand held device cannot identify the USB charger and cannot use the USB charger for charging accordingly, thereby ensuring the charging safety of the hand held device.

It should be noted that, FIG. 2 is only a specific schematic diagram of the hand held device charging interface, the identification information acquisition module may also be connected to the D- pin or the D+ pin, and the non-power pin connected to the identification information acquisition module corresponds to the pin connected to the identification information module 100, which is not limited by the present invention.

In actual application, the identification information module in the embodiment corresponding to FIG. 1 may be a detecting resistance R, or an identification information memory that stores identity identification information of the USB charger. The following respectively introduces the specific embodiments of the USB charger and the hand held device corresponding to the two manners, respectively.

(I) When the identification information module is a detecting resistance

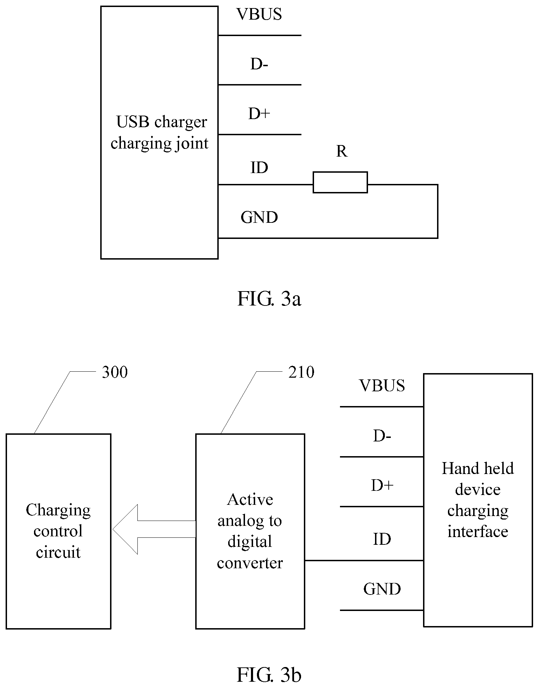

Please refer to FIG. 3a, which shows a circuit conceptual diagram of a USB charger charging interface. The charging interface is a type B USB interface or a Micro USB interface, including 5 pins: VBUS, D-, D+, ID, and GND, where the VBUS pin is a positive pole of an output power supply, and the GND is a negative pole of the output power supply, and the identification information module 100 is a detecting resistance R, and the detecting resistance R is connected between the ID pin and the GND pin.

By detecting the voltage signal on the detecting resistance R, the hand held device identifies whether the USB charger is a matching USB charger of the hand held device.

When the identification information module inside the USB charger is a detecting resistance, two implementation manners are available for the identification information acquisition module inside the hand held device. One is implementation through an active analog to digital converter, and the other is implementation through a passive analog to digital converter and a direct current power supply.

The following respectively introduces the embodiments of the hand held device corresponding to the two implementation manners:

(1) The identification information acquisition module is an active analog to digital converter.
Please refer to FIG. 3b, which shows a schematic structural diagram of a hand held device charging interface that matches the USB charger charging interface shown in FIG. 3a. The charging interface is a type B USB interface or a Micro USB interface, including 5 pins: VBUS, D-, D+, ID, and GND, where the VBUS pin is the positive pole of an output power supply and the GND is the negative pole of the output power supply, and different from the embodiment corresponding to FIG. 2, the identification information acquisition module specifically is an active analog to digital converter 210.

As shown in this figure, an input end of the active analog to digital converter 210 is connected to the ID pin of the hand held device charging interface, and an output end of the active analog to digital converter 210 is connected to a charging control circuit 300 inside the hand held device, and the active analog to digital converter 210 is capable of providing a power supply for a detecting resistance and is capable of acquiring the voltage drop on the detecting resistance R.

When the USB charger shown in FIG. 3a is inserted into the hand held device charging interface shown in FIG. 3b, the power supply inside the active analog to digital converter 210 forms a closed loop with the detecting resistance R inside the USB charger, and there is current flowing in the closed loop, and voltage drop is generated on the detecting resistance R, and the active analog to digital converter 210 acquires the voltage drop on the detecting resistance R, converts it to a digital signal and provides it to the charging control circuit 300.

The output current of the active analog to digital converter 210 is fixed, and the resistance value of the detecting resistance R is fixed. The resistance value error of the detecting resistance is considered and a standard voltage range on the detecting resistance R is obtained through calculation according to the formula U=IR.
The charging control circuit 300 compares the acquired voltage drop on the detecting resistance R with a standard voltage range, and when the voltage drop on the detecting resistance R is within the standard voltage range, an identification signal is output to connect the charging loop of the hand held device and the USB charger, and the hand held device is capable of using the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device.

It should be noted that, the resistance values of detecting resistances connected in series in USB chargers of the same model may be the same, and the output current of active analog to digital converters 210 inside the hand held devices of the same model may be set to a same value. In this case, the hand held devices of the same model may identify and use the corresponding USB chargers of the same model, so that a certain hand held device may use one type of USB chargers corresponding to the hand held device model for charging. The following uses a specific application example to describe the identification process of a hand held device and a USB charger:

Assume that the output current I of the active analog to digital converter 210 added inside the hand held device is 10uA, and the resistance value of the detecting resistance R connected in series between the ID pin and the GND pin inside the USB charger is 50K$\Omega\pm$5%, a standard voltage range may be obtained through calculation:

$$U=IR=10uA\times(50K\Omega\pm5\%)=0.5V\pm0.025V.$$

After the USB charger is inserted into the hand held device, the output current I of the active analog to digital converter 210 flows through the detecting resistance R and generates a voltage drop on the detecting resistance R. Then, the active analog to digital converter 210 acquires the voltage drop $U_R$ on the detecting resistance R, converts the voltage signal $U_R$ to a digital signal and provides it to the charging control circuit 300.
When the charging control circuit 300 detects that the voltage UR of the detecting resistance R is within a range of [0.475V, 0.525V], the identification signal is output to connect the charging loop of the hand held device and the USB charger so that the hand held device uses the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device.

(2) The identification information acquisition module is a passive analog to digital converter and a direct current power supply.

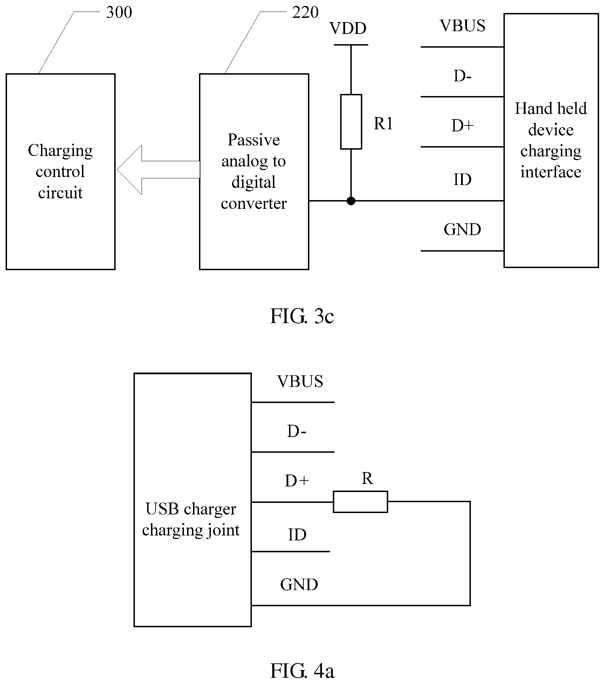

Please refer to FIG. 3c, which shows a schematic structural diagram of another hand held device charging interface that matches the USB charger charging interface shown in FIG. 3a. Different from the embodiment corresponding to FIG. 2: the identification information acquisition module specifically is implemented by a passive analog to digital converter 220 and a direct current power supply VDD.

Specifically, an input end of the passive analog to digital converter 220 is connected to the ID pin of the hand held device charging interface, and an output end of the passive analog to digital converter 220 is connected to the charging control circuit 300 inside the hand held device, and the direct current power supply VDD is connected to the ID pin of the hand held device charging interface through a pull-up resistance R1.

After the USB charger is inserted into the hand held device charging interface, the direct current power supply VDD, the pull-up resistance R1, and the detecting resistance R form a closed loop. Then, the current that flows through the detecting resistance R generates a voltage drop on the detecting resistance R, and the passive analog to digital converter 220 acquires the voltage drop on the detecting resistance R, converts it to a digital signal and provides it to the charging control circuit 300.

The charging control circuit 300 compares the acquired voltage drop on the detecting resistance R with the standard voltage range, and when the voltage drop on the detecting resistance R is within the standard voltage range, an identification signal is output to connect the charging loop of the hand held device and the USB charger, so that the hand held device uses the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device.

The standard voltage range is obtained through calculation according to the figure of the direct current power supply VDD, the resistance value of the pull-up resistance R1, and the resistance value of the detecting resistance R, and specifically, the standard voltage range is obtained through calculation according to the formula $U=R\times VDD/(R+R1)$ and by considering the error of the resistance.

The foregoing is the specific embodiment of the corresponding USB charger when the detecting resistance R is connected between the ID pin and the GND pin, and the following introduces, in detail, the specific embodiment of the USB charger when the detecting resistance R is connected to other pins.

When the detecting resistance R is connected in series to the D+ pin.

Please refer to FIG. 4a, which shows a schematic structural diagram of another USB charger charging interface. The charging interface is a type B USB interface or a Micro USB interface, including 5 pins: VBUS, D-, D+, ID, and GND, where the VBUS pin is a positive pole of an output power supply, and the GND is a negative pole of the output power supply, and different from the embodiment corresponding to FIG. 3a, the detecting resistance R is connected in series between the D+ pin and the GND pin.

(1) Identification information is an active analog to digital converter.

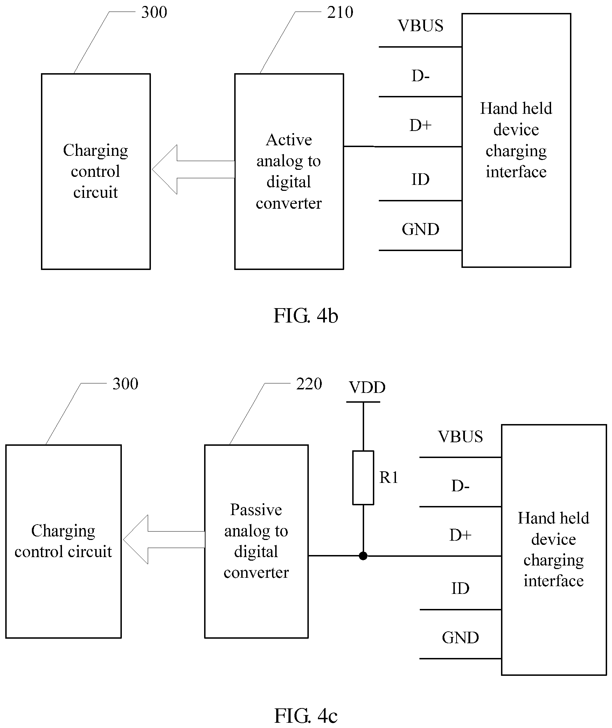

Refer to FIG. 4b, which shows a circuit conceptual schematic diagram of another hand held device charging interface corresponding to the USB charger shown in FIG. 4a. The difference from the embodiment corresponding to FIG. 3b lies in that: the active analog to digital converter 210 inside the hand held device provided by this embodiment is connected to a D+ pin, and specifically, an input end of the active analog to digital converter 210 is connected to the D+ pin, and an output end of the active analog to digital converter 210 is connected to a charging control circuit 300 inside the hand held device.

After the USB charger is inserted into the hand held device charging interface, the power supply inside the active analog to digital converter 210 forms a closed loop with the detecting resistance R, and then, the current that flows through the detecting resistance R generates a voltage drop on the detecting resistance R, and the active analog to digital converter 210 acquires the voltage drop on the detecting resistance R, converts a voltage signal on the detecting resistance R to a digital signal and provides it to the charging control circuit 300.

The charging control circuit 300 compares the acquired voltage drop on the detecting resistance R with the standard voltage range, and when the charging control circuit 300 detects that the voltage drop on the detecting resistance R is within the standard voltage range, an identification signal is output to connect the charging loop of the hand held device and the USB charger, so that the hand held device uses the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device.

The output current of the active analog to digital converter 210 is fixed, and the resistance value of the detecting resistance R is fixed. The resistance value error of the detecting resistance is considered and the standard voltage range on the detecting resistance R is obtained through calculation according to the formula U=IR.

(2) The identification information acquisition module is a passive analog to digital converter and a direct current power supply.

Please refer to FIG. 4c, which shows a schematic structural diagram of another hand held device charging interface that matches the USB charger charging interface shown in FIG. 4a. Different from FIG. 3c, a passive analog to digital converter 220 of the hand held device and a direct current power supply VDD are connected to the D+ pin.

Specifically, an input end of the passive analog to digital converter 220 is connected to the D+ pin inside the hand held device charging interface, and an output end of the passive analog to digital converter 220 is connected to the charging control circuit 300 inside the hand held device, and the direct current power supply VDD is connected to the D+ pin of the hand held device charging interface through a pull-up resistance R1.

After the USB charger is inserted into the hand held device charging interface, the direct current power supply VDD, the pull-up resistance R1, and the detecting resistance R form a closed loop. Then, the current that flows through the detecting resistance R generates a voltage drop on the detecting resistance R, and the passive analog to digital converter 220 acquires the voltage drop on the detecting resistance R, converts the voltage drop to a digital signal and provides it to the charging control circuit 300.

The charging control circuit 300 compares the acquired voltage drop on the detecting resistance R with the standard voltage range, and when the voltage drop on the detecting resistance R is within the standard voltage range, an identification signal is output to connect the charging loop of the hand held device and the USB charger, so that the hand held device uses the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device.

The figure of the direct current power supply VDD, the resistance value of the pull-up resistance R1, and the resistance value of the detecting resistance R are fixed. The error of the resistance is considered and the standard voltage range on the detecting resistance R is obtained through calculation according to the formula U=IR.

When the detecting resistance R is connected to the D- pin.

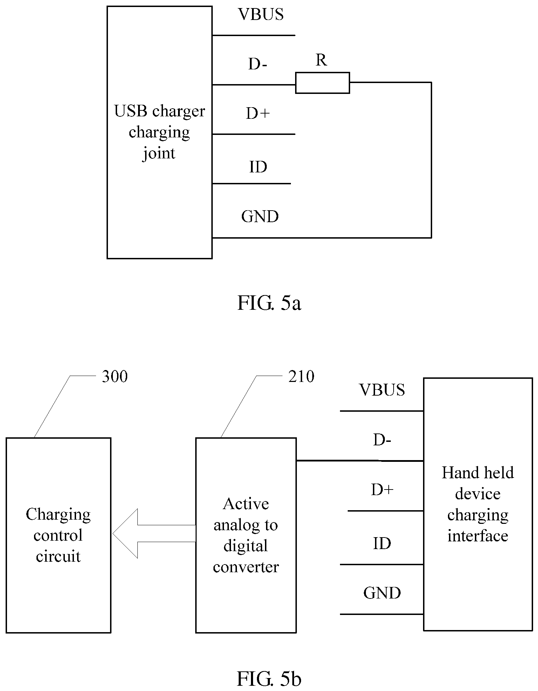

Please refer to FIG. 5a, which shows a schematic structural diagram of a USB charger charging interface. The charging interface is a type B USB interface or a Micro USB interface, including 5 pins: VBUS, D-, D+, ID, and GND, where the VBUS pin is a positive pole of an output power supply, and the GND is a negative pole of the output power supply, and different from the embodiment corresponding to FIG. 3a, the detecting resistance R is connected in series between the D- pin and the GND pin.

(1) The identification information acquisition module is an active analog to digital converter.

Refer to FIG. 5b, which shows a schematic structural diagram of a hand held device charging interface that matches the USB charger shown in FIG. 5a. Different from the embodiment corresponding to FIG. 3b, the active analog to digital converter 210 is connected between a D- pin and a charging control circuit 300.

In specific application, after the USB charger is inserted into the hand held device charging interface, the power supply inside the active analog to digital converter forms a closed loop with the detecting resistance R, and then, the current that flows through the detecting resistance R generates a voltage drop on the detecting resistance R, and the active analog to digital converter acquires the voltage drop on the detecting resistance R, converts it to a digital signal and provides it to the charging control circuit 300.

The charging control circuit 300 compares the acquired voltage drop on the detecting resistance R with a standard voltage range, and when the voltage drop on the detecting resistance R is within the standard voltage range, the hand held device is capable of identifying the USB charger and using the USB charger for charging; otherwise, the USB charger cannot be identified and the USB charger cannot be used for charging either, thereby ensuring the charging safety of the hand held device.

The output current of the active analog to digital converter 210 is fixed, and the resistance value of the detecting resistance R is fixed. The resistance value error of the detecting resistance is considered and the standard voltage range on the detecting resistance R is obtained through calculation according to the formula U=IR.

(2) The identification information acquisition module is a passive analog to digital converter and a direct current power supply.

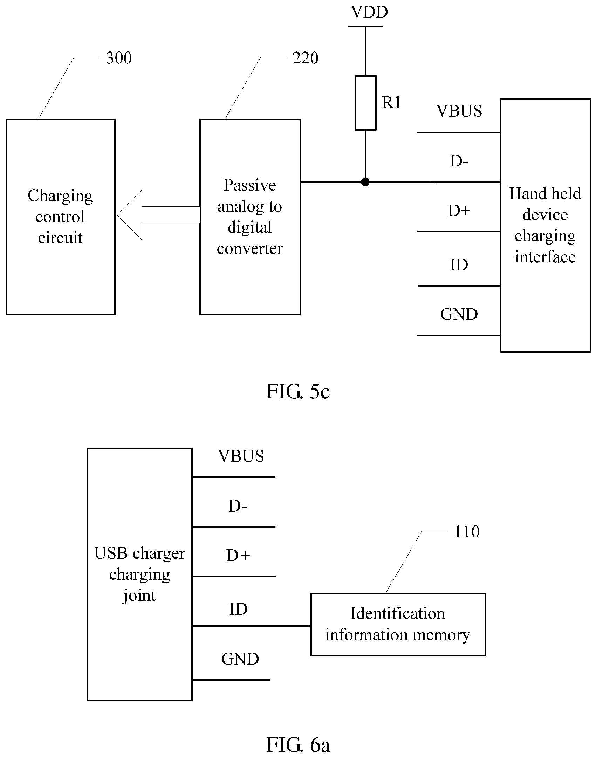

Refer to FIG. 5c, which shows a schematic structural diagram of another hand held device charging interface that matches the USB charger charging interface shown in FIG. 5a. Different from the embodiment corresponding to FIG. 3c, a passive analog to digital converter 220 and a direct current power supply VDD are connected to a D-pin.

Specifically, an input end of the passive analog to digital converter 220 is connected to the D- pin inside the hand held device charging interface, and an output end of the passive analog to digital converter 220 is connected to the charging control circuit 300 inside the hand held device, and the direct current power supply VDD is connected to the D- pin of the hand held device charging interface through a pull-up resistance R1.

After the USB charger is inserted into the hand held device charging interface, the direct current power supply VDD, the pull-up resistance R1, and the detecting resistance R connected between the D- pin and the GND pin inside the USB charger form a closed loop. Then, the current that flows through the detecting resistance R generates a voltage drop on the detecting resistance R, and the passive analog to digital converter 220 acquires the voltage drop on the detecting resistance R, converts it to a digital signal and provides it to the charging control circuit 300.

The charging control circuit 300 compares the acquired voltage drop on the detecting resistance R with the standard voltage range, and when the voltage drop on the detecting resistance R is within the standard voltage range, an identification signal is output to connect the charging loop of the hand held device and the USB charger, so that the hand held device uses the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device.

The figure of the direct current power supply VDD, the resistance value of the pull-up resistance R1, and the resistance value of the detecting resistance R are fixed. The error of the resistance is considered and the standard voltage range on the detecting resistance R is obtained through calculation according to the formula $U=IR$. The foregoing is an exemplary embodiment when an identification information module is implemented through a detecting resistance R, and the following introduces a specific embodiment when the identification information module is implemented through a memory.

(II) The identification information module is an identification information memory.

When the identification information module is the identification information memory, the identification information memory may be connected to different non-power pins of the USB charger, which will be introduced in the following one by one:

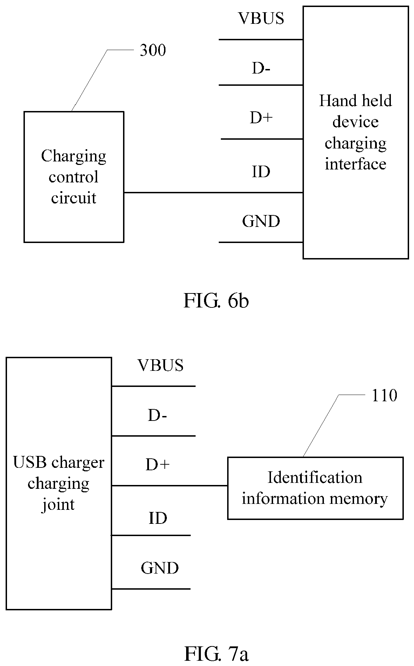

(1) When the identification information memory is connected to the ID pin.
Refer to FIG. 6a, which shows a schematic structural diagram of a USB charger charging interface. The charging interface is a type B USB interface or a Micro USB interface, including 5 pins: VBUS, D-, D+, ID, and GND, where the VBUS pin is a positive pole of an output power supply, and the GND is a negative pole of the output power supply, and different from the embodiment corresponding to FIG. 1: an identification information module 100 specifically may be the identification information memory 110 that stores identification information of the USB charger. Specifically, the identification information memory 110 is connected to the ID pin, and is configured to store the identification information that identifies identity information of the USB charger, where the identification information may be an 8-bit binary code. The identification information memory may be an EPROM (Erasable Programmable ROM, erasable programmable ROM), and certainly it may be other read-write memories.
Correspondingly, refer to FIG. 6b, which shows a schematic structural diagram of a hand held device charging interface that matches the USB charger charging interface shown in FIG. 6a, where the identification signal acquisition module may be a serial data line.
Specifically, the serial data line is connected between the ID pin inside the hand held device and a charging control circuit 300. Specifically, one end of the serial data line is connected to the ID pin inside the hand held device, and the other end is connected to the charging control circuit 300, and is configured to transmit the identification information inside the USB charger into the charging control circuit 300.
After the USB charger is inserted into the hand held device charging interface, the charging control circuit 300 of the hand held device acquires the identification information inside the USB charger through the serial data line and compares the identification information with standard identification information, and if the identification information acquired from the USB charger is the same as the standard identification information, an identification signal is output to connect the charging loop of the hand held device and the USB charger, so that the hand held device uses the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device.
The identification code stored in the USB charger may be a code that is set at discretion, and specifically, it may be an 8-bit binary code, and at the same time, the code is stored inside the hand held device. Besides, the identification information of the USB chargers that matches the hand held devices of the same model may be the same. In this case, the hand held devices of the same model may use the corresponding USB chargers of the same model.

(2) When the identification information memory is connected to the D+ pin

Please refer to FIG. 7a, which shows a schematic structural diagram of another USB charger charging interface. Different from FIG. 6a, the identification information memory 110, which is used to store the identification information of the USB charger, is connected to the D+ pin.

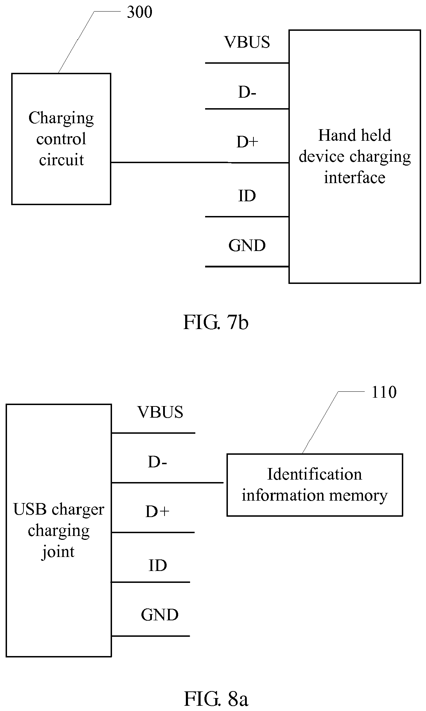

Correspondingly, please refer to FIG. 7b, which shows a schematic structural diagram of a hand held device charging interface that matches the USB charger charging interface shown in FIG. 7a. Different from the embodiment corresponding to FIG. 6b, the serial data line is connected between the D+ pin and the charging control circuit 300, and is capable of transmitting the identification information inside the identification information memory 110 to the charging control circuit 300.

After the USB charger is inserted into the hand held device charging interface, the charging control circuit 300 of the hand held device acquires the identification information inside the USB charger through the serial data line and compares the identification information with standard identification information, and if the identification information acquired from the USB charger is the same as the standard identification information, an identification signal is output to connect the charging loop of the hand held device and the USB charger, so that the hand held device uses the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device.

(3) When the identification information memory is connected to the D- pin

Please refer to FIG. 8a, which shows another schematic structural diagram of a USB charger charging interface. Different from FIG. 6a, the identification information memory 110, which is used to store the identification information of the USB charger, is connected to the D- pin.

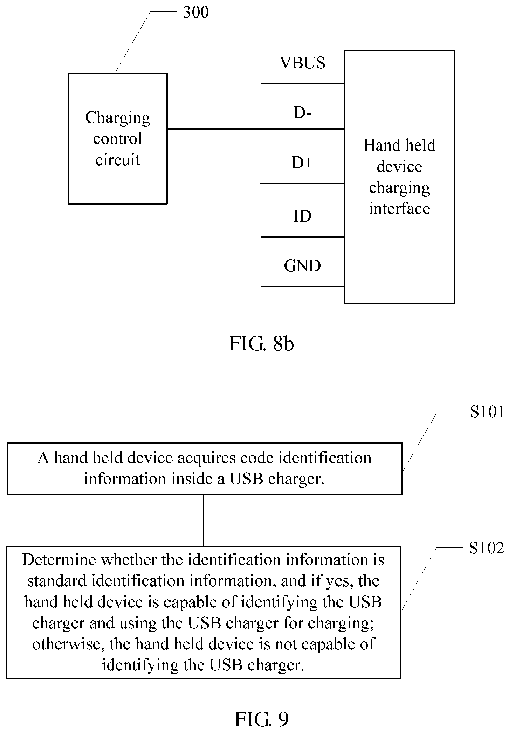

Correspondingly, refer to FIG. 8b, which shows a schematic structural diagram of a hand held device charging interface that matches the USB charger charging interface shown in FIG. 8a. Different from the embodiment shown in FIG. 6b, the serial data line is connected between the D- pin and the charging control circuit 300, and is capable of transmitting the identification information inside the identification information memory 110 to the charging control circuit 300.

After the USB charger is inserted into the hand held device charging interface, the charging control circuit 300 of the hand held device acquires the identification information inside the USB charger through the serial data line and compares the identification information with standard identification information, and if the identification information acquired from the USB charger is the same as the standard identification information, an identification signal is output to connect the charging loop of the hand held device and the USB charger, so that the hand held device uses the USB charger for charging; otherwise, the charging control circuit 300 outputs that the signal cannot be identified, and the charging loop of the hand held device and the USB charger cannot form a closed loop, that is, the hand held device cannot use the USB charger for charging, thereby ensuring the charging safety of the hand held device. It should be noted that, in the embodiments corresponding to FIG. 6a to FIG. 8b, the identification information memory may be a memory or other storage devices, and the identification information may be a binary code and may also be a code in other coding forms.

Referring to FIG. 9, an embodiment of the present invention further provides a method for identifying a universal serial bus charger that matches a hand held device, where an identification information acquisition module is added among charging control circuits inside the hand held device, and correspondingly, an identification information module is connected in series inside the USB charger that matches the hand held device, and after the USB charger is inserted into the hand held device charging interface, the method for the hand held device to identify the USB charger includes:

S101: The hand held device acquires identification information inside the USB charger.

Specifically, the identification information may be voltage information on a detecting resistance connected in series inside a USB charger charging interface, and may also be code information.

S102: Determine whether the identification information is standard identification information. If yes, the hand held device is capable of identifying the USB charger and using the USB charger for charging; otherwise, the hand held device is not capable of identifying the USB charger.

In actual application, the identification information may be voltage information, and may also be identification code information, and the following introduces the foregoing two types of identification information in detail, respectively:

1. When the identification information is voltage information

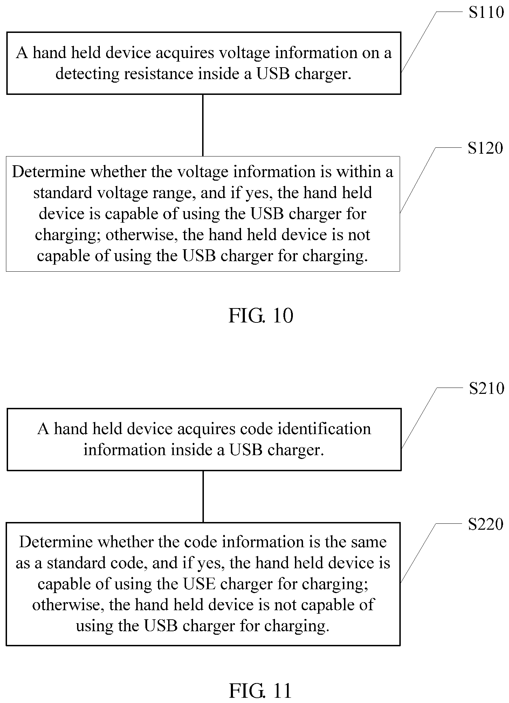

Please refer to FIG. 10, which shows another method for identifying a USB charger according to an embodiment of the present invention, where the identification information inside the USB charger is voltage information, and the identification method includes the following steps:

S110: A hand held device acquires voltage information on the detecting resistance inside the USB charger connected to the hand held device.

Specifically, the detecting resistance may be connected in series between any non-power pin and a GND pin of the USB charger; an active analog to digital converter is, or a passive analog to digital converter and a direct current power supply are connected to the non-power pin of the hand held device charging interface, which is capable of providing power supply for the detecting resistance and acquiring a voltage drop on the detecting resistance R, and then the voltage drop signal is converted to a digital signal, which is provided to the charging control circuit inside the hand held device.

S120: The hand held device compares the received voltage information on the detecting resistance with a standard voltage range, and if the voltage information is within the standard voltage range, the hand held device is capable of using the USB charger for charging; otherwise, it is not capable of using the USB charger for charging.

The charging control circuit inside the hand held device compares the acquired voltage information on the detecting resistance R with the standard voltage range, and if the voltage information is within the standard voltage range, the charging control circuit is capable of using the USB charger for charging; otherwise, the charging control circuit is not capable of using the USB charger for charging. The standard voltage range is obtained through calculation through Ohm's law $U=IR$, which is not described herein again.

2. When the identification information is an identification code

Please refer to FIG. 11, which shows a schematic flowchart of another USB charger identification method according to an embodiment of the present invention. Different from the method embodiment corresponding to FIG. 9, the identification information inside the USB charger is a code that identifies the identity information of the USB charger, where the method includes:

S210: The hand held device acquires an identification code inside the USB charger connected to the hand held device.

Specifically, the identification code inside the USB charger may be an 8-bit binary code, and is configured to exclusively mark an identity of the USB charger.

The hand held device acquires the identification code through the internal serial data line and provides it to the charging control circuit inside the hand held device.

S220: The hand held device compares the received identification code with a standard code, and if the identification code is the same as the standard code, the hand held device is capable of using the USB charger for charging; otherwise, it is not capable of using the USB charger for charging.

The standard code is also an 8-bit binary code. During hand held device production, the identification code inside the USB charger that matches the hand held device is stored in the charging control circuit inside the hand held device to ensure that the standard code inside the hand held device is the same as the identification code inside the corresponding charger, thereby ensuring that the hand held device can only use its matching USB charger for charging.

It should be noted that, the hand held device mentioned in all embodiments of the present invention may be a cell phone.

The foregoing descriptions are merely specific implementation manners of the present invention. It should be noted that, a person of ordinary skill in the art may further make several improvements and modifications without departing from the principle of the present invention, and the improvements and modifications should also be construed as falling within the protection scope of the present invention.

**Claims**

1. A hand held device, wherein a charging interface thereof is a universal serial bus USB interface, comprising 5 pins: VBUS, D+, D-, ID, and GND, wherein the VBUS pin is a positive pole of an input power supply and the GND is a negative pole of the input power supply, the hand held device further comprising: an identification information acquisition module (200) and a charging control circuit (300), the identification information acquisition module (200), connected between the charging control circuit (300) and a non-power pin of the hand held device charging interface, is configured to acquire the identification information of a USB charger, and the non-power pin is the D+ pin, the D- pin, or the ID pin; and the charging control circuit (300) is configured to receive the identification information of the USB charger provided by the identification information acquisition module (200) and use the identification information to determine whether a USB charger matches the hand held device, wherein the hand held device uses the USB charger for charging when the charging control circuit (300) determines that the USB charger matches the hand held device and **characterized in that**
the hand held device excludes using the USB charger for charging when the charging control circuit (300) determines that the USB charger does not match the hand held device.

2. The hand held device according to claim 1, wherein the identification information acquisition module (200) is an active analog to digital converter (210), and an input end of the active analog to digital converter is connected to the non-power pin, and an output end of the active analog to digital converter is connected to the charging control circuit (300).

3. The hand held device according to claim 1, wherein the identification information acquisition module (200) comprises: a passive analog to digital converter (220) and a direct current power supply, wherein
an input end of the passive analog to digital converter is connected to the non-power pin, and an output end is connected to the charging control circuit (300); and
the direct current power supply is connected, through a current limiting resistance, to the non-power pin connected to the input end of the passive analog to digital converter.

4. The hand held device according to claim 1, wherein the identification information acquisition module (200) is: a serial data line connected between the non-power pin and the charging control circuit (300).

5. A method for a hand held device to identify a matching universal serial bus charger, comprising:

acquiring, by the hand held device, identification information of a USB charger connected to the hand held device; and
comparing, by the hand held device, the received identification information with standard identification information, and if the identification information is the standard identification information, identifying that the USB charger is a matching USB charger of the hand held device and using the USB charger for charging; otherwise, identifying that the USB charger is not a matching USB charger of the hand held device and excluding using the USB charger for charging.

6. The method for a hand held device to identify a matching universal serial bus charger according to claim 5, wherein the identification information is voltage information, the method comprising the following steps:

acquiring, by the hand held device, voltage information provided by the USB charger connected to the hand held device; and
comparing, by the hand held device, the received voltage information with a standard voltage range, and if the voltage information is within the standard voltage range, identifying that the USB charger is a matching USB charger of the hand held device; otherwise, identifying that the USB charger is not a matching USB charger of the hand held device.

7. The method for a hand held device to identify a matching universal serial bus charger according to claim 6, wherein the identification information is an identification code, the method comprising the following steps:

acquiring, by the hand held device, an identification code provided by the USB charger connected to the hand held device; and
comparing, by the hand held device, the received identification code with a standard identification code, and if the identification code is the same as the standard identification code, identifying that the USB charger is a matching USB charger of the hand held device; otherwise, identifying that the USB charger is not a matching USB charger of the hand held device.

**Patentansprüche**

1. Handgerät, wobei eine Ladeschnittstelle desselben eine Universal-Serial-Bus(USB)-Schnittstelle ist, die 5 Pins umfasst: VBUS, D+, D-, ID und GND, wobei der Pin VBUS ein positiver Pol einer Eingangsstromversorgung ist und der GND ein negativer Pol der Eingangsstromversorgung ist, wobei das Handgerät ferner umfasst: ein Identifikationsinformationserfassungmodul (200) und eine Ladesteuerschaltung (300), wobei das zwischen die Ladesteuerschaltung (300) und einen Nicht-Strom-Pin der Handgerät-Ladeschnittstelle geschaltete Identifikationsinformationserfassungsmodul (200) ausgelegt ist, die Identifikationsinformation eines USB-Ladegeräts zu erfassen, und der Nicht-Strom-Pin der Pin D+, der Pin D- oder der Pin ID ist; und die Ladesteuerschaltung (300) ausgelegt ist, die von dem Identifikationsinformationserfassungsmodul (200) bereitgestellte Identifikationsinformation des USB-Ladegeräts zu empfangen und die Identifikationsinformation dazu zu verwenden, zu bestimmen, ob ein USB-Ladegerät zu dem Handgerät passt, wobei das Handgerät das USB-Ladegerät zum Laden verwendet, wenn die Ladesteuerschaltung (300) bestimmt, dass das USB-Ladegerät zu dem Handgerät passt,
und **dadurch gekennzeichnet, dass**
das Handgerät ausschließt, dass das USB-Ladegerät zum Laden verwendet wird, wenn die Ladesteuerschaltung (300) bestimmt, dass das USB-Ladegerät nicht zum Handgerät passt.

2. Handgerät nach Anspruch 1, wobei das Identifikationsinformationserfassungsmodul (200) ein aktiver Analog-Digital-Umsetzer (210) ist, und ein Eingangsende des aktiven Analog-Digital-Umsetzers mit dem Nicht-Strom-Pin verbunden ist und ein Ausgangsende des aktiven Analog-Digital-Umsetzers mit der Ladesteuerschaltung (300) verbunden ist.

3. Handgerät nach Anspruch 1, wobei das Identifikationsinformationserfassungsmodul (200) umfasst: einen passiven Analog-Digital-Umsetzer (220) und eine Gleichspannungsversorgung, wobei
ein Eingangsende des passiven Analog-Digital-Umsetzers mit dem Nicht-Strom-Pin verbunden ist und ein Ausgangsende mit der Ladesteuerschaltung (300) verbunden ist; und
die Gleichspannungsversorgung durch einen Strombegrenzungswiderstand mit dem mit dem Eingangsende des passiven Analog-Digital-Umsetzers verbundenen Nicht-Strom-Pin verbunden ist.

4. Handgerät nach Anspruch 1, wobei das Identifikationsinformationserfassungsmodul (200) eine zwischen den Nicht-Strom-Pin und die Ladesteuerschaltung (300) geschaltete serielle Datenübertragungsleitung ist.

5. Verfahren zum Identifizieren eines passenden Universal-Serial-Bus-Ladegeräts durch ein Handgerät, umfassend:

   Erfassen, durch das Handgerät, einer Identifikationsinformation eines mit dem Handgerät verbundenen USB-Ladegeräts; und
   Vergleichen, durch das Handgerät, der empfangenen Identifikationsinformation mit einer Standardidentifikationsinformation und, falls die Identifikationsinformation die Standardidentifikationsinformation ist, Identifizieren, dass das USB-Ladegerät ein für das Handgerät passendes USB-Ladegerät ist und Verwenden des USB-Ladegeräts zum Laden; anderenfalls Identifizieren, dass das USB-Ladegerät kein für das Handgerät passendes USB-Ladegerät ist und Ausschließen, dass das USB-Ladegerät zum Laden verwendet wird.

6. Verfahren zum Identifizieren eines passenden Universal-Serial-Bus-Ladegeräts durch ein Handgerät nach Anspruch 5, wobei die Identifikationsinformation eine Spannungsinformation ist, wobei das Verfahren die folgenden Schritte umfasst:

   Erfassen, durch das Handgerät, einer von dem mit dem Handgerät verbundenen USB-Ladegerät bereitgestellten Spannungsinformation; und
   Vergleichen, durch das Handgerät, der empfangenen Spannungsinformation mit einem Standardspannungsbereich und, falls die Spannungsinformation innerhalb des Standardspannungsbereichs liegt, Identifizieren, dass das USB-Ladegerät ein für das Handgerät passendes USB-Ladegerät ist; anderenfalls Identifizieren, dass das USB-Ladegerät kein für das Handgerät passendes USB-Ladegerät ist.

7. Verfahren zum Identifizieren eines passenden Universal-Serial-Bus-Ladegeräts durch ein Handgerät nach Anspruch 6, wobei die Identifikationsinformation ein Identifikationscode ist, wobei das Verfahren die folgenden Schritte umfasst:

   Erfassen, durch das Handgerät, eines von dem mit dem Handgerät verbundenen USB-Ladegerät bereitgestellten Identifikationscodes; und
   Vergleichen, durch das Handgerät, des empfangenen Identifikationscodes mit einem Standardidentifikationscode, und falls der Identifikationscode der gleiche ist wie der Standardidentifikationscode, Identifizieren, dass das USB-Ladegerät ein für das Handgerät passendes USB-Ladegerät ist; anderenfalls Identifizieren, dass das USB-Ladegerät kein für das Handgerät, passendes USB-Ladegerät ist.

**Revendications**

1. Terminal mobile, dans lequel une interface de charge de ce dernier est une interface de bus série universel (USB), comprenant 5 broches : VBUS, D+, D-, ID et GND, la broche VBUS étant un pôle positif d'une alimentation électrique d'entrée et la broche GND étant un pôle négatif de l'alimentation électrique d'entrée, le terminal mobile comprenant en outre : un module d'acquisition d'informations d'identification (200) et un circuit de commande de charge (300), le module d'acquisition d'informations d'identification (200), raccordé entre le circuit de commande de charge (300) et une broche sans alimentation électrique de l'interface de charge de terminal mobile, étant configuré pour acquérir les informations d'identification d'un chargeur USB, et la broche sans alimentation électrique étant la broche D+, la broche D- ou la broche ID ; et le circuit de commande de charge (300) étant configuré pour recevoir les informations d'identification du chargeur USB fournies par le module d'acquisition d'informations d'identification (200) et utiliser les informations d'identification pour déterminer si un chargeur USB correspond au terminal mobile, le terminal mobile utilisant le chargeur USB pour effectuer la charge lorsque le circuit de commande de charge (300) détermine que le chargeur USB correspond au terminal mobile et **caractérisé en ce que**
le terminal mobile exclut l'utilisation du chargeur USB pour effectuer la charge lorsque le circuit de commande de charge (300) détermine que le chargeur USB ne correspond pas au terminal mobile.

2.  Terminal mobile selon la revendication 1, dans lequel le module d'acquisition d'informations d'identification (200) est un convertisseur analogique-numérique actif (210) et une extrémité d'entrée du convertisseur analogique-numérique actif est raccordée à la broche sans alimentation électrique et une extrémité de sortie du convertisseur analogique-numérique actif est raccordée au circuit de commande de charge (300).

3.  Terminal mobile selon la revendication 1, dans lequel le module d'acquisition d'informations d'identification (200) comprend : un convertisseur analogique-numérique passif (220) et une alimentation électrique en courant continu, dans lequel une extrémité d'entrée du convertisseur analogique-numérique passif est raccordée à la broche sans alimentation électrique et une extrémité de sortie est raccordée au circuit de commande de charge (300) ; et l'alimentation électrique en courant continu est raccordée, au moyen d'une résistance de limitation de courant, à la broche sans alimentation électrique raccordée à l'extrémité d'entrée du convertisseur analogique-numérique passif.

4.  Terminal mobile selon la revendication 1, dans lequel le module d'acquisition d'informations d'identification (200) est une ligne de données série raccordée entre la broche sans alimentation électrique et le circuit de commande de charge (300).

5.  Procédé pour un terminal mobile pour identifier un chargeur à bus série universel correspondant, consistant à :

    acquérir, au moyen du terminal mobile, des informations d'identification d'un chargeur USB raccordé au terminal mobile ; et
    comparer, au moyen du terminal mobile, les informations d'identification reçues avec des informations d'identification standards et, si les informations d'identification sont les informations d'identification standards, identifier que le chargeur USB est un chargeur USB correspondant du terminal mobile et utiliser le chargeur USB pour effectuer la charge ; sinon, identifier que le chargeur USB n'est pas un chargeur USB correspondant du terminal mobile et exclure l'utilisation du chargeur USB pour effectuer la charge.

6.  Procédé pour un terminal mobile pour identifier un chargeur à bus série universel correspondant selon la revendication 5, dans lequel les informatisons d'identification sont des informations de tension, le procédé comprenant les étapes suivantes consistant à :

    acquérir, au moyen du terminal mobile, des informations de tension fournies par le chargeur USB raccordé au terminal mobile ; et
    comparer, au moyen du terminal mobile, les informations de tension reçues avec une plage de tension standard et, si les informations de tension se trouvent dans la plage de tension standard, identifier que le chargeur USB est un chargeur USB correspondant du terminal mobile ; sinon, identifier que le chargeur USB n'est pas un chargeur USB correspondant du terminal mobile.

7.  Procédé pour un terminal mobile pour identifier un chargeur à bus série universel correspondant selon la revendication 6, dans lequel les informations d'identification sont un code d'identification, le procédé comprenant les étapes suivantes consistant à:

    acquérir, au moyen du terminal mobile, un code d'identification fourni par le chargeur USB raccordé au terminal mobile ; et
    comparer, au moyen du terminal mobile, le code d'identification reçu avec un code d'identification standard et, si le code d'identification est le même que le code d'identification standard, identifier que le chargeur USB est un chargeur USB correspondant du terminal mobile ; sinon, identifier que le chargeur USB n'est pas un chargeur USB correspondant du terminal mobile.

VBUS

D-

D+

ID

GND

USB charger charging joint

Identification information module

—— 100

FIG. 1

—— 300

—— 200

VBUS

D-

D+

ID

GND

Charging control circuit

Identification information acquisition module

Hand held device charging interface

FIG. 2

VBUS

D-

D+

USB charger
charging joint

ID          R

GND

FIG. 3a

300          210

VBUS

D-

Charging
control
circuit

Active
analog to
digital
converter

D+

ID

Hand held
device
charging
interface

GND

FIG. 3b

FIG. 3c

FIG. 4a

300 — Charging control circuit

210 — Active analog to digital converter

VBUS

D-

D+

ID

GND

Hand held device charging interface

FIG. 4b

300 — Charging control circuit

220 — Passive analog to digital converter

VDD

R1

VBUS

D-

D+

ID

GND

Hand held device charging interface

FIG. 4c

VBUS

D-    R

USB charger
charging
joint

D+

ID

GND

FIG. 5a

300    210

VBUS

D-

Charging
control
circuit

Active
analog to
digital
converter

D+

Hand held
device
charging
interface

ID

GND

FIG. 5b

VDD

300

220

R1

VBUS

D-

Charging
control
circuit

Passive
analog to
digital
converter

D+

ID

Hand held
device
charging
interface

GND

FIG. 5c

VBUS

D-

110

D+

USB charger
charging
joint

ID

Identification
information memory

GND

FIG. 6a

VBUS

300

D-

D+

Hand held
device
charging
interface

Charging
control
circuit

ID

GND

FIG. 6b

VBUS

110

D-

USB charger
charging
joint

D+

Identification
information memory

ID

GND

FIG. 7a

300

VBUS

D-

D+

ID

GND

Charging control circuit

Hand held device charging interface

FIG. 7b

110

VBUS

D-

D+

ID

GND

USB charger charging joint

Identification information memory

FIG. 8a

300

VBUS

D-

Charging
control
circuit

D+

Hand held
device
charging
interface

ID

GND

FIG. 8b

S101

A hand held device acquires code identification
information inside a USB charger.

S102

Determine whether the identification information is
standard identification information, and if yes, the
hand held device is capable of identifying the USB
charger and using the USB charger for charging;
otherwise, the hand held device is not capable of
identifying the USB charger.

FIG. 9

S110

A hand held device acquires voltage information on a detecting resistance inside a USB charger.

S120

Determine whether the voltage information is within a standard voltage range, and if yes, the hand held device is capable of using the USB charger for charging; otherwise, the hand held device is not capable of using the USB charger for charging.

FIG. 10

S210

A hand held device acquires code identification information inside a USB charger.

S220

Determine whether the code information is the same as a standard code, and if yes, the hand held device is capable of using the USE charger for charging; otherwise, the hand held device is not capable of using the USB charger for charging.

FIG. 11

**EP 2 713 280 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010070659 A